# EUROPEAN PATENT SPECIFICATION

(11) **EP 3 387 058 B1**
(45) Date of publication and mention of the grant of the patent: **13.11.2019**
(21) Application number: 16809789.7
(22) Date of filing: 08.12.2016
(51) Int. Cl.: C08K 5/20, B29C 67/00, C08K 3/36, C08L 67/08

(54) **METHOD FOR 3D PRINTING**
VERFAHREN ZUM 3D-DRUCKEN
PROCÉDÉ D'IMPRESSION 3D

(30) Priority: 11.12.2015 EP 15199449
(43) Date of publication of application: 17.10.2018
(73) Proprietor: DSM IP Assets B.V., 6411 TE Heerlen (NL)
(72) Inventor: TOMIC, Katarina, 6100 AA Echt (NL); ZOETELIEF, Wilhelmus, Frederikus, 6100 AA Echt (NL)
(74) Representative: V.O.
(86) International application number: PCT/EP2016/080346
(87) International publication number: WO 2017/097941

(56) References cited:
- US-A1- 2012 123 086
- DATABASE WPI Week 201440 Thomson Scientific, London, GB; AN 2014-L83436 XP002757855, -& CN 103 756 236 A (ZHU Y) 30 April 2014 (2014-04-30)
- DATABASE CA [Online] CHEMICAL ABSTRACTS SERVICE, COLUMBUS, OHIO, US; ADACHI, MASATAKA: "Stretchable nonwoven fabrics with improved handle and stretch recovery comprising fibers spun from polyester elastomer compositions containing fatty acid amides and inorganic powders and manufacture thereof", XP002757856, retrieved from STN Database accession no. 140:424922 -& JP 2004 156180 A (TOYOBO CO., LTD., JAPAN) 3 June 2004 (2004-06-03)

## Description

The invention relates to a method for 3D-printing of shaped articles of a polymer composition using a fused filament fabrication (FFF) printer.

In fused filament fabrication (FFF), also referred to as fused deposition modeling (FDM), a filament of a polymer composition is supplied from a coil of such filament to an extrusion nozzle. In many FFF machines, the filament is pushed into the print head at a controlled rate, by for instance a worm-drive gear system or a pair of profiled wheels. The print head may be heated to melt the filament with the molten filament then being deposited by an extrusion nozzle of the print head, normally on a substrate for the first layer and after that at the growing shaped object. After the deposition the polymer composition solidifies. An examples of such a method and apparatus is for example disclosed in WO15019212.

A problem with the known methods is, that if a thermoplastic elastomer is used, the printing process is not running smooth, because of fluctuations in the output of the molten polymer composition from the print head. It is even possible that total interruptions occur. This is especially true if the speed of the printing process is increased to an economically acceptable level.

Object of the invention is to provide a method for 3-D printing of a polymer composition containing a thermoplastic elastomer, by using a fused filament fabrication printer, that does not show this problem.

Surprisingly this object is obtained if the polymer composition contains 0.1 - 3.0 wt.% of a mold release agent and/or an external lubricant and optionally 0.5 - 10 wt.% of a matting agent and wherein the polymer composition contains a thermoplastic elastomer wherein the thermoplastic elastomer contains monomer units of dimerised fatty acids and/or a diamine derived there from .

The process of the present invention is running smoothly, even at considerable higher speeds compared to the known process. Obtaining a good adhesion between subsequent layers in 3D-printed objects is critical. Nevertheless the adhesion in objects obtained with the process of the present invention is at a sufficient level, despite the use of the mold release agent and/or the external lubricant.

Preferably the polymer composition contains the mold release agent and/or the external lubricant.

A mold release agent is a chemical compound that facilitates the release of a part from a mold, preferably by creating a slip effect between the surface of the part and the surface of the mold cavity. Examples of mold release agents include compounds based on fatty acids, for example metal salts of stearates especially sodium, zinc or calcium stearate or montanate.

An external lubricant is a chemical compound that reduces the pressure in an extruder die, by creating a slip layer between the die wall and the polymer melt. Examples of external lubricants include fatty acids (for instance lauric, myristic, palmitic, stearic, oleic, erucic fatty acid), Teflon, hydrocarbon waxes (for instance PE, PP, paraffin waxes). Preferably Acid esters: montan wax, stearyl stearate, distearyl phtalate, metallic soaps (for example calcium stearate, zinc stearate) are used. Most preferably Acid amides such as of the primary amides erucamide (loxiol), oleamide, stearamide, of the secondary amides ethylene bis steraramide (EBS) and ethylene bis oleamide (EBO) are used. With acid amides not only a smooth running process at very high speeds has been obtained, but also a very high adhesion between the subsequent layers in the object produced with the process according to the present invention.

Often chemical compounds are suitable both to serve as a mold release agent and as an external lubricant.

Preferably the polymer composition according to the invention contains at least 0.2 weight % of mold release agent and/or external lubricant, more preferably at least 0.3 wt.%, most preferably at least 0.4 wt.%. Preferably the polymer composition according to the invention contains at most 2.5 weight % of mold release agent and/or external lubricant, more preferably at most 2 wt.% most preferably at most 1 wt.

The polymer composition preferably contains a matting agent, since with a matting agent even higher production speeds can be obtained, without problems.

Matting agents include talcum and silica particles. The particles preferably have an average size (d₅₀ on weight basis) of between 1 and 10 microns. Talcum is a mineral and is produced and commercially available as a matting agent. Silica particles that are suitable for use as matting agents may be produced in a flame process, to obtain so-called fumed silica products. Preferably the silica particles are obtained in a precipitation process, to obtain so-called precipitated silica. The silica particles that are suitable for use as matting agents are commercially available. Preferably the polymer composition according to the invention contains at least 1 weight % of matting agent, more preferably at least 2 wt. %, most preferably at least 3 wt. %. Preferably the polymer composition according to the invention contains at most 8 weight % of matting agent, more preferably at most 6 wt.%.

Preferably the composition contains at least the mold release agent and/or the external lubricant. Most preferably the composition contains the matting agent and mold release agent and/or the external lubricant.

The method according to the invention is especially suitable for a polymer composition having a hardness of shore D <70, preferably < 60, more preferably < 50, more preferably < 40, more preferably < 30, more preferably <20. The method according to the invention is also suitable for polymer compositions having a hardness of shore A less than 90 or even lower. This is because with thermoplastic elastomers having such a low hardness, the problem referred to above are most pronounced, and it is desirable to produce shaped articles with of the polymer composition having such a low hardness.

The copolyester elastomers and copolyamide elastomers are thermoplastic polymers with elastomeric properties comprising polyester hard segments or polyamide hard segments, and soft segments derived from another polymer. The soft segments contain monomer units of dimerised fatty acids and/or a diamine derived there from. The polyester hard segments in the copolyester elastomers are generally composed of monomer units derived from at least one alkylene diol and at least one aromatic or cycloaliphatic dicarboxylic acid. The polyamide hard segments of the copolyamide elastomers are generally composed of monomer units from at least one aromatic and/or aliphatic diamine and at least one aromatic or aliphatic dicarboxylic acid, and or an aliphatic amino-carboxylic acid.

The hard segments typically consist of a polyester or polyamide having a melting temperature or glass temperature, where applicable, well above room temperature, and may be as high as 300 °C or even higher. Preferably the melting temperature or glass temperature is at least 150 °C, more preferably at least 170 °C or even at least 190 °C.

Preferably, the thermoplastic elastomer is a copolyester elastomer. Examples of copolyester elastomers include a copolyesterester elastomer, a copolycarbonateester elastomer or a copolyetherester elastomer; i.e. a copolyester block copolymer with soft segments derived from monomer units of dimerised fatty acids and/or a diamine derived therefrom. Copolyester elastomers are available, for example, under the trade name Arnitel, from DSM Engineering Plastics B.V., The Netherlands.

The aromatic dicarboxylic acid in the hard segments suitably is selected from the group consisting of terephthalic acid, isophthalic acid, phthalic acid, 2,6-naphthalenedicarboxylic acid and 4,4-diphenyldicarboxylic acid, and mixtures thereof. Preferably, the aromatic dicarboxylic acid comprises terephthalic acid, more preferably consists for at least 50 mole %, still more preferably at least 90 mole %, or even fully consists of terephthalic acid, relative to the total molar amount of dicarboxylic acid.

The alkylene diol in the hard segments suitably is selected from the group consisting of ethylene glycol, propylene glycol, butylene glycol, 1,2-hexane diol, 1,6-hexamethylene diol, 1,4-butane diol, benzene dimethanol, cyclohexane diol, cyclohexane dimethanol, and mixtures thereof. Preferably, the alkylene diol comprises ethylene glycol and/or 1,4 butane diol, more preferably consists for at least 50 mole %, still more preferably at least 90 mole %, or even fully consists of ethylene glycol and/or 1,4 butane diol, relative to the total molar amount of alkylene diol.

The hard segments most preferably comprise or even consist of polybutylene terephthalate segments.

### Dimerised fatty acid as soft block.

Very good results are obtained with thermoplastic elastomers containing monomer units of dimerised fatty acids and/or a diamine derived there from. A very strong adhesion between the printed layers is obtained. A polymer composition containing a thermoplastic elastomer is herein understood that also blends with further thermoplastic elastomers may be used.

Such dimerised fatty acids acids may be obtained by the dimerisation of a monomeric unsaturated fatty acid and are indicated by dimerised fatty acid.

After the dimerisation reaction the so obtained oligomer mixture is further processed, for example by distillation, to yield a mixture having a high content of the dimerised fatty acid. The double bonds in the dimerised fatty acid may be saturated by catalytic hydrogenation. The term dimerised fatty acid as it is used here relates to both types of these dimerised fatty acids, the saturated and the unsaturated. It is preferred that the dimerised fatty acid is saturated.

The dimerised fatty acids preferably contain from 32 up to 44 carbon atoms. Most preferably the dimerised fatty acid contains 36 carbon atoms. The amount of C-atoms normally is an average value, since the dimerised fatty acids normally are commercially available as a mixture.

It is also possible to produce a derivative of the dimerised fatty acid by replacing one or two of the acid groups by an amine group by one of the well-known reactions.

Preferably the thermoplastic elastomer contains 20 - 80 wt. % of polybutylene terephthalate hard segments and between 20 and 80 wt. % of monomer units of dimerised fatty acid and/or a diamine derived therefrom. More preferably the thermoplastic elastomer contains 40 - 80 wt. % of polybutylene terephthalate hard segments and between 20 and 60 wt. % of monomer units of dimerised fatty acid and/or a diamine derived therefrom. A high content of soft segments results in softer material, for which the presence of a mold release agent and/or external lubricant shows even more advantages with respect to 3D-printing.

The invention also relates to the filament used in the 3D-printing process according to the present invention. Such a filament may be produced by well-known extrusion processes for that purposes. Normally the filament is a monofilament. The diameter of the filament may be between 1 and 3.5 mm, is preferably between 1.5 and 3 mm.

The invention also relates to a system for applying a filament to a 3D-printer and adapted to be mounted on a 3D-printer, comprising the filament according to the present invention. Examples of such systems include a reel and cassette.
Fig. 1 shows a schematic view of an example of a print head of an FFF apparatus that may be used in the method according to the invention and a substrate.
Fig. 2 shows a printed slab and test specimen.
Fig. 3 shows a schematic view of an example of a print head and transport mechanism of the Bowden type FFF apparatus that may be used in the method according to the invention and a substrate.

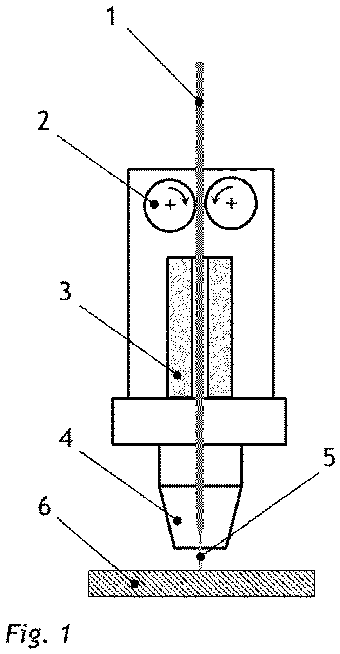

Fig. 1 shows a schematic view of an example of a print head of an FFF apparatus that may be used in the method according to the invention. A filament (1) is transported from a reel (not shown) by a pair of wheels (2) into an oven (3) of the print head, for melting the filament. The molten material of the filament flows through de nozzle (4). Pressure to obtain this flow is obtained by force applied by the pair of wheels to the filament and yet un-molten filament acting as a piston in the first part of the oven. The extrudate (5) leaving the nozzle is deposited on the substrate (6), respectively the object being formed, positioned below the nozzle.

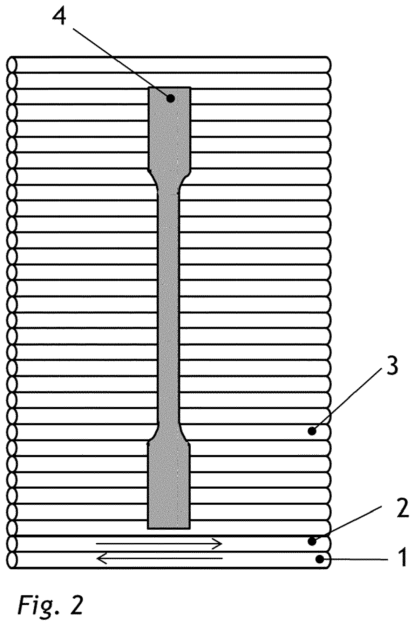

Fig. 2 shows a printed slab (3), a first extrudate (1), a second extrudate (2) and a test specimen for determining the strain at break (4).

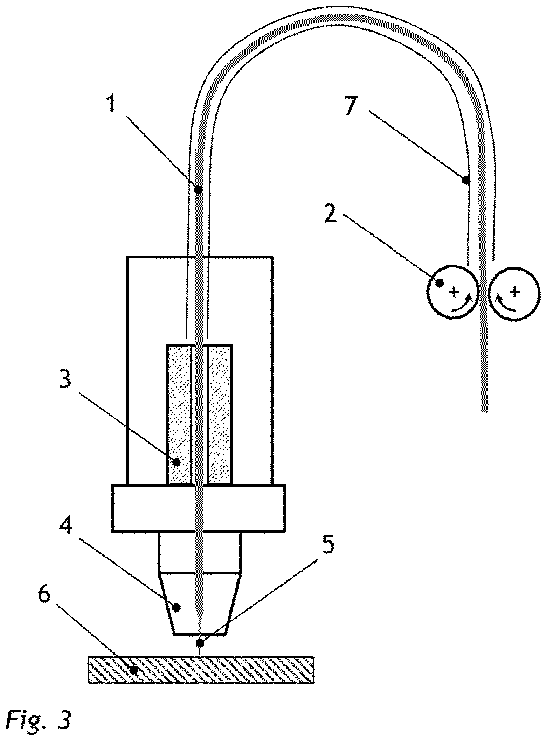

Fig. 3 shows a schematic view of an example of a print heat and transport mechanism that may be used in the method according to the invention. In this so-called Bowden type extruder, the filament (1) is transported from a reel (not shown) by a pair of wheels (2) into an oven (3) of the print head, for melting the filament. Here, the transport wheels are not connected directly on top of the print head, but the filament is guided by a flexible tube (7) from the pair of wheels into the print head. This setup requires a longer transportation of the filament, which has a higher risk of no feed as the filament may become stuck in the tube and/or transport mechanism.

### Examples

### Materials used:

- Arnitel ECO™ a thermoplastic copolyester delivered by DSM in the Netherlands comprising hard segments of polybutylene terephthalate and soft segments of dimerised fatty acid and a shore D hardness of 34.
- Ninjaflex™, a thermoplastic poly urethane material delivered by Fenner Drives Corp. US
- Loxiol E spez P, an external lubricant based on eurecamide, delivered by Emery Oleochemicals, Germany.

Nip™ CX200gel, a matting agent based on precipitated silica particles, delivered by Tosch Silica Corp. from Japan.

### Comparative experiment A

A filament of Arnitel ECO™, having a diameter of 1.75 mm was transported with various speeds through the print head of a Cartesio 3D-printer delivered by MaukCC, Maastricht, The Netherlands. A schematic view of such a printer is shown in Fig. 1. The temperature of the oven was 240 °C, the diameter of the nozzle was 0.4 mm. The extrudate leaving the nozzle was deposited in a pattern of straight lines on a substrate, having the form of a flat plane, as shown in Fig.2. The substrate was moved below the nozzle in the x-y direction with the same speed as the speed of the extrudate leaving the nozzle.

The shape of the extrudate as deposited on the substrate was classified as follows:
1: smooth regular shape.
2. irregular surface, but extrudate not interrupted.
3. irregular surface, extrudate also with interruptions

For some speeds "no feed" was observed and raising the speed was no longer tested as no material could be fed.

The results for various speeds are given in table 1.

### Example I

As comparative experiment A, however the filament was of a polymer composition containing Arnitel ECO™, 0.5 wt. % Loxiol E spez P and 5 wt. Nip™ CX200gel. The results are given in Table 1.

### Comparative experiment A2

As comparative experiment A, however the filament was Ninjaflex™, printed at a temperature of 230°C. The results are given in Table 1. At a speed of 30 mm/s and higher no feed was possible anymore.

**Table 1**

| Speed, mm/s | Example I | Comparative exp. A | Comparative exp. A2 |
|---|---|---|---|
| 10 | 1 | 1 | 1 |
| 20 | 1 | 2 | 2 |
| 30 | 2 | 3 | No feed |
| 40 | 2 | 3 | |

### Comparative experiment B

As comparative experiment A, but at a constant transportation speed of the filament speed of 10 mm/s. A first extrudate was in a first step deposited in a straight line on the substrate as in comparative experiment A. The extrudate was allowed to solidify. In the second step a second extrudate was deposited aside the first extrudate. In this way the second extrudate adhered to the first extrudate. This was repeated until a printed slab having a length of 120 mm was obtained (see Fig. 2). The adhesion between the extrudates was measured by determining the strain at break of a test specimen punched out of the printed slab.

The position of the ISO 527-2-1BA test specimen is depicted in Fig. 2. Tensile tests are performed at a cross-head speed of 500 mm/min at ambient temperature.

The result is given in table 2.

### Example II

As comparative experiment B, however the filament was of a polymer composition containing Arnitel ECO™, 0.5 wt. % Loxiol E spez P and 5 wt. % Nip™ CX200gel. The results are given in table 2.

**Table 2**

| | Strain at break [%] |
|---|---|
| Example II | 520 - 620 |
| Comparative exp. B | 480 - 600 |

### Comparative experiment C

A filament of Arnitel ECO™, having a diameter of 1.75 mm was transported with various speeds through the print head of a Bowden type printer as is schematically drawn in Fig. 3. The filament guidance tube has a length of 700mm and inner diameter 2mm suitable for filament diameter 1.75mm. The temperature of the oven was 230 °C, the diameter of the nozzle was 0.35 mm. The extrudate leaving the nozzle was deposited in a pattern of straight lines on a substrate, having the form of a flat plane, as shown in Fig.2. The substrate was moved below the nozzle in the x-y direction with the same speed as the speed of the extrudate leaving the nozzle. The shape of the extrudate as deposited on the substrate was classified as follows:
1: complete print
2. incomplete print

For some speeds "no feed" was observed and raising the speed was no longer tested as no material could be fed. Likewise, after the classification "incomplete print" the test was not carried out further for higher speeds.

The result for various speeds is given in Table 3.

### Example III

As comparative experiment C, however the filament was of a polymer composition containing Arnitel ECO™ and 0.25 wt. % Loxiol E spez P. The results are given in Table 3.

### Example IV

As comparative experiment C, however the filament was of a polymer composition containing Arnitel ECO™ and 0.5 wt. % Loxiol E spez P. The results are given in Table 3.

**Table 3**

| Speed, mm/s | Example III | Example IV | Comparative exp. C |
|---|---|---|---|
| 10 | 1 | 1 | no feed |
| 20 | 1 | 1 | |
| 30 | 2 | 1 | |
| 40 | | 1 | |
| 50 | | 2 | |

The above examples clearly show that upon presence of a mold release agent and/or external lubricant and/or a matting agent, printability is improved. The speed could be considerably increased while printing was still possible. For a polymer not containing a mold release agent and/or external lubricant and/or matting agent, much lower speeds could be reached or even no feed could be established at all. Inter-filament adhesion was also reported to be sufficient, which was denoted as "1" or "2" at various speeds, for the method according to the invention.

## Claims

1. A method for 3D-printing of a polymer composition containing a thermoplastic elastomer, by using a fused filament fabrication printer, **characterized in that** the polymer composition contains 0.1-3 wt.% of a mold release agent and/or an external lubricant and wherein the thermoplastic elastomer contains monomer units of dimerised fatty acids and/or a diamine derived there from.

2. A method for 3D-printing according to claim 1, wherein the polymer composition contains 0.5-10 wt.% of a matting agent, such as 1-8 wt.%, or 2-6 wt.%.

3. A method for 3D-printing according to claim 1 or 2, wherein the polymer composition contains 0.2-2.5 wt.% of a mold release agent and/or an external lubricant, such as 0.3-2 wt.%, or 0.4-1 wt.%.

4. A method for 3D-printing according to any one of claims 1-3, wherein the polymer composition contains an acid amide.

5. A method for 3D-printing according to any one of claims 1-4, wherein the polymer composition contains eurecamide.

6. A method for 3D-printing according to any one of claims 1-5, wherein the polymer composition has a hardness of shore D < 70.

7. A method for 3D-printing according to any one of claims 1-6, wherein the polymer composition has a hardness of shore D < 60.

8. A method for 3D-printing according to any one of claims 1-7, wherein the polymer composition has a hardness of shore D < 50.

9. A method for 3D-printing according to any one of claims 1-8, wherein the dimerized fatty acid contains from 32 up to 44 carbon atoms.

10. A method for 3D-printing according to any one of claims 1-9, wherein the dimerized fatty acid contains 36 carbon atoms.

11. A method for 3D-printing according to any one of the claims 1-10, wherein the thermoplastic elastomer is a copolyester elastomer or a copolyamide elastomer, wherein
i) said copolyester elastomer comprises polyester hard segments composed of monomer units derived from at least one alkylene diol and at least one aromatic or cycloaliphatic dicarboxylic acid, and
ii) said copolyamide elastomer comprises polyamide hard segments composed of monomer units from at least one aromatic and/or aliphatic diamine and at least one aromatic or aliphatic dicarboxylic acid, and or an aliphatic amino-carboxylic acid.

12. A method for 3D-printing according to any one of the claims 1-11, wherein the thermoplastic elastomer contains 20-80 wt. % of polybutylene terephthalate hard segments and between 20 and 80 wt. % of monomer units of dimerised fatty acid and/or a diamine derived therefrom, preferably the thermoplastic elastomer contains 40-80 wt.% of polybutylene terephatalate hard segments and between 20 and 60 wt.% of monomer units of dimerised fatty acid and/or a diamine derived therefrom.

13. A filament for 3D-printing as defined any one of the preceding claims

14. A filament according to claim 13, wherein said filament has a diameter of between 1 and 3.5 mm, more preferably between 1.5 and 3 mm.

15. A system for feeding a filament to an apparatus for 3D-printing comprising the filament of claim 13 or 14.

## Patentansprüche

1. Verfahren zum 3D-Drucken einer Polymerzusammensetzung, die ein thermoplastisches Elastomer enthält, unter Verwendung eines Schmelzstrang-Schichtungsdruckers, **dadurch gekennzeichnet, dass** die Polymerzusammensetzung 0,1 bis 3 Gew.-% eines Entformungsmittels und/oder eines externen Gleitmittels enthälts, wobei weiterhin das thermoplastische Elastomer Monomereinheiten aus dimerisierten Fettsäuren und/oder einem sich davon ableitenden Diamin enthält.

2. Verfahren zum 3D-Drucken gemäß Anspruch 1, wobei die Polymerzusammensetzung 0,5 bis 10 Gew.-% eines Mattglanzmittels, wie etwa 1 bis 8 Gew.-%, oder 2 bis 6 Gew.-%, enthält.

3. Verfahren zum 3D-Drucken gemäß Anspruch 1 oder 2, wobei die Polymerzusammensetzung 0,2 bis 2,5 Gew.-% eines Entformungsmittels und/oder externen Gleitmittels, wie etwa 0,3 bis 2 Gew.-%, oder 0,4 bis 1 Gew.-%, enthält.

4. Verfahren zum 3D-Drucken gemäß einem beliebigen der Ansprüche 1 bis 3, wobei die Polymerzusammensetzung ein Säureamid enthält.

5. Verfahren zum 3D-Drucken gemäß einem beliebigen der Ansprüche 1 bis 4, wobei die Polymerzusammensetzung Erucamid enthält.

6. Verfahren zum 3D-Drucken gemäß einem beliebigen der Ansprüche 1 bis 5, wobei die Polymerzusammensetzung eine Shore-D-Härte von < 70 hat.

7. Verfahren zum 3D-Drucken gemäß einem beliebigen der Ansprüche 1 bis 6, wobei die Polymerzusammensetzung eine Shore-D-Härte von < 60 hat.

8. Verfahren zum 3D-Drucken gemäß einem beliebigen der Ansprüche 1 bis 7, wobei die Polymerzusammensetzung eine Shore-D-Härte von < 50 hat.

9. Verfahren zum 3D-Drucken gemäß einem beliebigen der Ansprüche 1 bis 8, wobei die dimerisierte Fettsäure 32 bis 44 Kohlenstoffatome enthält.

10. Verfahren zum 3D-Drucken gemäß einem beliebigen der Ansprüche 1 bis 9, wobei die dimerisierte Fettsäure 36 Kohlenstoffatome enthält.

11. Verfahren zum 3D-Drucken gemäß einem beliebigen der Ansprüche 1 bis 10, wobei es sich bei dem thermoplastischen Elastomer um ein Copolyester-Elastomer oder ein Copolyamid-Elastomer handelt, wobei
i) das Copolyester-Elastomer Polyester-Hartsegmente umfasst, die sich aus Monomereinheiten zusammensetzen, welche sich von mindestens einem Alkylendiol und mindestens einer aromatischen oder cycloaliphatischen Dicarbonsäure ableiten, und
ii) das Copolyamid-Elastomer Polyamid-Hartsegmente umfasst, die sich aus Monomereinheiten zusammensetzen, welche sich von mindestens einem aromatischen und/oder aliphatischen Diamin und von mindestens einer aromatischen oder aliphatischen Dicarbonsäure, und/oder einer aliphatischen Aminocarbonsäure, ableiten.

12. Verfahren zum 3D-Drucken gemäß einem beliebigen der Ansprüche 1 bis 11, wobei das thermoplastische Elastomer 20 bis 80 Gew.-% an Polybutylenterephthalat-Hartsegmenten und zwischen 20 und 80 Gew.-% an Monomereinheiten dimerisierter Fettsäuren und/oder eines sich davon ableitenden Diamins enthält, wobei das thermoplastische Elastomer vorzugweise 40 bis 80 Gew.-% an Polybutylenterephthalat-Hartsegmenten und zwischen 20 und 60 Gew.-% an Monomereinheiten aus dimerisierten Fettsäuren und/oder einem sich davon ableitenden Diamin enthält.

13. Strang zum 3D-Drucken gemäß der Begriffsbestimmung in einem beliebigen der vorhergehenden Ansprüche.

14. Strang gemäß Anspruch 13, wobei der Strang einen Durchmesser zwischen 1 und 3,5 mm, insbesondere zwischen 1,5 und 3 mm, hat.

15. System zum Zuführen eines Stranges in ein Gerät zum 3D-Drucken, wobei es den Strang nach Anspruch 13 oder 14 umfasst.

## Revendications

1. Procédé d'impression 3D d'une composition polymère contenant un élastomère thermoplastique, au moyen d'une imprimante de fabrication par dépôt de filament fondu, **caractérisé en ce que** la composition polymère contient 0,1-3 % en poids d'un agent de démoulage et/ou d'un lubrifiant externe et dans lequel l'élastomère thermoplastique contient des motifs monomères d'acides gras dimérisés et/ou d'une diamine dérivée de ceux-ci.

2. Procédé d'impression 3D selon la revendication 1, dans lequel la composition polymère contient 0,5-10 % en poids d'un agent de matité, par exemple 1-8 % en poids, ou 2-6 % en poids.

3. Procédé d'impression 3D selon la revendication 1 ou 2, dans lequel la composition polymère contient 0,2-2,5 % en poids d'un agent de démoulage et/ou d'un lubrifiant externe, par exemple 0,3-2 % en poids, ou 0,4-1 % en poids.

4. Procédé d'impression 3D selon l'une quelconque des revendications 1 à 3, dans lequel la composition polymère contient un amide d'acide.

5. Procédé d'impression 3D selon l'une quelconque des revendications 1 à 4, dans lequel la composition polymère contient de l'érucamide.

6. Procédé d'impression 3D selon l'une quelconque des revendications 1 à 5, dans lequel la composition polymère a une dureté Shore D < 70.

7. Procédé d'impression 3D selon l'une quelconque des revendications 1 à 6, dans lequel la composition polymère a une dureté Shore D < 60.

8. Procédé d'impression 3D selon l'une quelconque des revendications 1 à 7, dans lequel la composition polymère a une dureté Shore D < 50.

9. Procédé d'impression 3D selon l'une quelconque des revendications 1 à 8, dans lequel l'acide gras dimérisé contient de 32 à 44 atomes de carbone.

10. Procédé d'impression 3D selon l'une quelconque des revendications 1 à 9, dans lequel l'acide gras dimérisé contient 36 atomes de carbone.

11. Procédé d'impression 3D selon l'une quelconque des revendications 1 à 10, dans lequel l'élastomère thermoplastique est un élastomère de copolyester ou un élastomère de copolyamide, dans lequel
i) ledit élastomère de copolyester comprend des segments durs de polyester composés de motifs monomères dérivés d'au moins un alkylène-diol et d'au moins un acide carboxylique aromatique ou cycloaliphatique, et
ii) ledit élastomère de copolyamide comprend des segments durs de polyamide composés de motifs monomères issus d'au moins une diamine aromatique et/ou aliphatique et d'au moins un acide dicarboxylique aromatique ou aliphatique, et/ou d'un acide aminocarboxylique aliphatique.

12. Procédé d'impression 3D selon l'une quelconque des revendications 1 à 11, dans lequel l'élastomère thermoplastique contient 20-80 % en poids de segments durs de téréphtalate de polybutylène et entre 20 et 80 % en poids de motifs monomères d'acide gras dimérisé et/ou d'une diamine dérivée de celui-ci, de préférence l'élastomère thermoplastique contient 40-80 % en poids de segments durs de téréphtalate de polybutylène et entre 20 et 60 % en poids de motifs monomères d'acide gras dimérisé et/ou d'une diamine dérivée de celui-ci.

13. Filament pour l'impression 3D telle que définie dans l'une quelconque des revendications précédentes

14. Filament selon la revendication 13, ledit filament ayant un diamètre compris entre 1 et 3,5 mm, mieux entre 1,5 et 3 mm.

15. Système destiné à fournir un filament à un appareil d'impression 3D comprenant le filament de la revendication 13 ou 14.
